# EUROPEAN PATENT SPECIFICATION

(11) **EP 2 989 899 B1**
(45) Date of publication and mention of the grant of the patent: **27.07.2016**
(21) Application number: 14182628.9
(22) Date of filing: 28.08.2014
(51) Int. Cl.: A23K 10/18, A23K 30/18

(54) **Compositions of hetero- and homofermentative lactic acid bacterial species for dual purpose silage preservation**
Zusammensetzungen von hetero- und homofermentativen Milchsäurebakterienspezies für Silagekonservierung mit doppeltem Zweck
Compositions d'espèces bactériennes d'acide lactique hétéro et homofermentaire pour la conservation d'ensilage à double effet

(43) Date of publication of application: 02.03.2016
(73) Proprietor: Chr. Hansen A/S, 2970 Hoersholm (DK)
(72) Inventor: Hindrichsen, Ida, 2980 Kokkedal (DK); Milora, Nina, 3460 Birkeroed (DK); Ohlsson, Christer, 26775 Ekeby (SE)

(56) References cited:
- WO-A2-2008/073841
- WO-A2-2014/170233
- JATKAUSKAS JONAS ET AL: "The effects of three silage inoculants on aerobic stability in grass, clover-grass, lucerne and maize silages", AGRICULTURAL AND FOOD SCIENCE, vol. 22, no. 1, 2013, pages 137-144, XP002736545,
- JONAS JATKAUSKAS ET AL: "Evaluation of fermentation parameters, microbiological composition and aerobic stability of grass and whole crop maize silages treated with microbial inoculants", ZEMDIRBYSTE-AGRICULTURE, vol. 100, no. 2, 28 June 2013 (2013-06-28) , pages 143-150, XP055172296, ISSN: 1392-3196, DOI: 10.13080/z-a.2013.100.018
- H ZAHIRODDINI ET AL: "Effects of Microbial Inoculants on the Fermentation, Nutrient Retention, and Aerobic Stability of Barley Silage", ASIAN-AUSTRALASIAN JOURNAL OF ANIMAL SCIENCES, vol. 19, no. 10, 1 October 2006 (2006-10-01), pages 1429-1436, XP055171970,
- JAAKKOLA S ET AL: "Aerobic stability and fermentation quality of round bale silage treated with inoculans or propionic acid", GRASSLAND IN A CHANGING WORLD. PROCEEDINGS OF THE 23RD GENERAL MEETING OF THE EUROPEAN GRASSLAND FEDERATION, KIEL, GERMANY, 29TH AUGUST - 2ND SEPTEMBER 2010,, 29 August 2010 (2010-08-29), pages 503-505, XP009182847, ISBN: 978-3-86944-021-7

## Description

### FIELD OF THE INVENTION

The present invention provides improved bacterial inoculant products comprising obligatory heterofermentative bacteria of the species *Lactobacillus buchneri* combined with appropriate homofermentative species of at least one of the species *Lactococcus* and *Enterococcus.*

More specifically, the invention relates to a silage inoculant which as the active components only comprises obligatory heterofermentative lactic acid bacteria of the species *Lactobacillus buchneri* and homofermentative bacteria of at least one of the species *Lactococcus* and *Enterococcus* which do not reduce growth of the obligatory heterofermentative lactic acid bacteria.

Further, the invention relates to a method for producing a fermented feed product, said method comprising inoculating a plant material with the silage inoculant according to the invention. It has surprisingly been found that the silage inoculant is effective even if the silage has only been incubated for a period of up to 14 days.

### BACKGROUND OF THE INVENTION

Silage can be made from various plant materials which are stored under anaerobic conditions. It is preserved by establishing anaerobic conditions and by fast pH reduction through organic acid production from native or inoculated lactic acid bacteria. The low pH inhibits the outgrowth of many spoilage strains which otherwise can result in loss of a great amount of nutrients. At the time when the silage bunker, silo, heap or wrap is opened in order to be fed to animals, such as ruminants, the silage is exposed to air. The aerobic conditions can, if aerobic spoilage strains are present, result in outgrowth of spoilage strains. The outgrowth of aerobic spoilage strains results in temperature increase and high loss of nutrients. Both the spoilage in the start of the fermentation and the aerobic spoilage at the feedout represent an economic loss for farmers.

The first generation of silage inoculants included obligatory homofermentative (e.g. *L*. *acidophilius, L. salivarius*) and facultative heterofermentative bacterial species (e.g. *L. plantarum*) and aimed at reducing pH rapidly to prevent outgrowth of spoilage strains naturally occurring in the plant material, like Gram negative *Enterobacteraceae* (e.g. *Salmonella, Escherichia coli, Yersinia pestis, Klebsiella, Shigella*) or Gram positive *Clostridia* (*C*. *tyrobutyricum, C. perfringens, C. botulinum, C. sporogenes, C*. *butyricum*). The prevention of the spoilage strains by fast pH reduction reduced nutrient losses and often to some extent improved aerobic stability (Jatkauskas *et al.* (2013), Jatkauskas and Vrotniakiene (2013)).

The second generation of silage inoculants included first of all *L. buchneri,* an obligative heterofermentative species, which is superior in preventing aerobic deterioration by aerobic spoilage strains at feedout where the silage bunker/heap is exposed to air. The reverse side of using *L. buchneri* as silage inoculant is that it has a longer lag phase compared to other species and in the early stage of fermentation its production of acetic acid and lactic acid does not decrease the pH fast, when compared to obligatory homofermentative or facultative heterofermentative species.

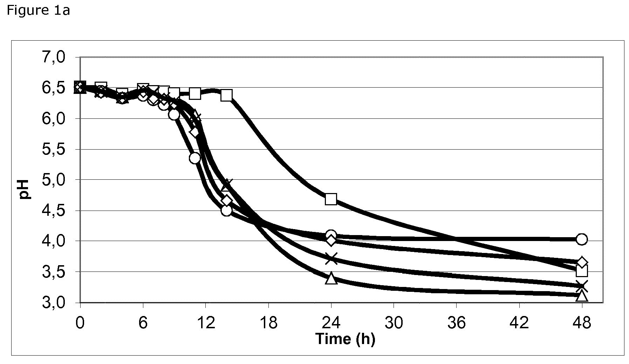

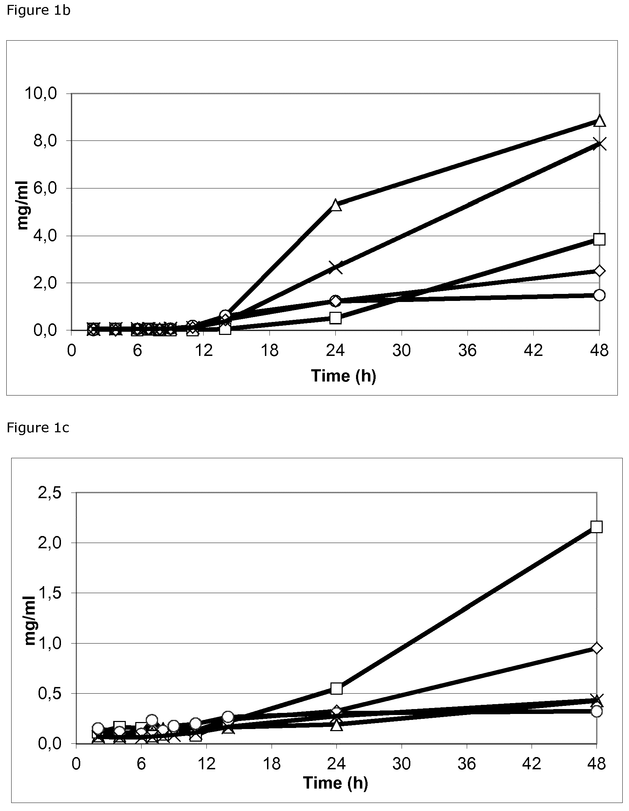

New products have been developed by combining obligatory homofermentative and/or facultative heterofermentative strains with obligatory heterofermentative strains, first of all *L. buchneri.* With these combinations a fast pH reduction in the start and high aerobic stability at feedout is the aim. These combination products achieve a better aerobic stability compared to products containing homofermentative or/and facultative heterofermentative strains only, though the aerobic stability is not as good as the one achieved with the obligatory heterofermentative *L*. *buchneri* alone. This is illustrated in Figure 1 from Jatkauskas and Vrotniakiene (2013), where *L*. *buchneri* alone (P0) was superior in keeping the temperature low. The second best product in keeping the temperature low for many hours was an obligatory heterofermentative/facultative heterofermentative/homofermentative combination product containing *L. buchneri, L. plantarum, E. faecium,* (P1), which again was followed by purely facultative heterofermentative/homofermentative products containing *L. plantarum, E. faecium, L. lactis* with sodium benzoate (P2a) or without (P2b), a facultative heterofermentative/homofermentative product containing *L. plantarum, E. faecium, L. lactis,* (P3), and a facultative heterofermentative product containing two strains *of L. plantarum,* (P4). Silage which was not inoculated had the lowest aerobic stability.

This experiment illustrates that *L. buchneri* alone is superior compared to the other tested products with regard to aerobic stability, i.e. the time it takes for aerobic spoilage strains to heat up a silage bunker when re-exposed to air.

### SUMMARY OF THE INVENTION

The problem to be solved by the present invention is to have a fast initial fermentation in order to reduce dry matter (DM) loss and spoilage in the early phase of fermentation and at the same time achieve an aerobic stability which is the same or at least close to inoculation with an obligatory heterofermentative strains such as *L. buchneri* alone.

Today many products on the market combine high lactic acid producing facultative heterofermentative/homofermentative strains with *L. buchneri.* The present inventors have found that this combination does not achieve the best possible aerobic stability (i.e. keeping the temperature at ambient temperature at feed out), probably because it reduces the growth *of L. buchneri* and/or produces high amounts of lactic acid which can be utilized by aerobic spoilage strains and thereby start silage deterioration when exposed to air. The advantage of the present invention is the combination of the obligatory heterofermentative species *L. buchneri*) only with homofermentative bacteria of at least one of the species *Lactococcus* and *Enterococcus* which do not reduce the growth of the obligatory heterofermentative lactic acid bacteria of the species *Lactobacillus buchneri.* Such homofermentative species do not counteract the positive effect of the obligatory heterofermentative species *L. buchneri,* or to a much lesser extent than in a conventional combination product.

### DETAILED DISCLOSURE OF THE INVENTION

Lactic acid bacteria include genera like *Lactococcus spp., Enterococcus spp., Oenococcus spp., Pediococcus spp., Streptococcus spp., Leuconostoc spp.* and *Lactobacillus spp..* They can be divided into three sub-groups: obligatory heterofermentative, facultative heterofermentative and homofermentative. Lactic acid bacteria of the genus *Lactobacillus* can be either facultative heterofermentative or homofermentative depending on the species (Vandamme et al., 1996).

Obligatory heterofermentative lactic acid bacteria ferment hexoses to lactic acid, acetic acid, ethanol and carbon dioxide by the phospho-gluconate pathway. Examples of obligatory heterofermentative lactic acid bacterial species are *Leuconostoc* and *Lactobacillus* such as *Lactobacillus brevis, Lactobacillus buchneri, Lactobacillus fermentum, Lactobacillus reuteri.*

Facultative heterofermentative lactic acid bacteria additionally can ferment pentoses to lactic acid, acetic acid, formic acid and ethanol, when glucose is limited. Examples of facultative heterofermentative lactic acid bacteria are *Pediococcus spp., Lactobacillus casei, Lactobacillus curvatus, Lactobacillus plantarum, Lactobacillus sakei.*

Homofermentative lactic acid bacteria are defined as bacteria that degrade mainly hexoses by the Embden-Meyerhof pathway to lactic acid. Examples of homofermentative lactic acid bacteria are *Lactococcus spp., Enterococcus spp.* and *Lactobacillus* such as *Lactobacillus acidophilus, Lactobacillus delbrueckii, Lactobacillus helveticus, Lactobacillus salivarius.*

The present invention relates to a silage inoculant which as the active components only comprises obligatory heterofermentative lactic acid bacteria of the species *Lactobacillus buchneri* and homofermentative bacteria of at least one of the species *Lactococcus* and *Enterococcus* which do not reduce growth of the obligatory heterofermentative lactic acid bacteria of the species *Lactobacillus buchneri.*

The silage inoculant only comprises the above combination as the active components and does not comprise other active component(s) such as one or more enzymes, organic acids, sodium benzoate, sodium nitrate or hexamine.

By the term "at least one" is meant that the composition may comprise one or two of the homofermentative bacterial species *Lactococcus* and *Enterococcus.*

Evidently, the homofermentative bacterial species should not reduce growth of the obligatory heterofermentative lactic acid bacterial species. If in doubt, this can be tested by growing the strains which are to be tested overnight in Mann-Rogosa-Sharpe (MRS) media at 37°C, streaking both the homofermentative bacterial species and the obligatory heterofermentative lactic acid bacterial species to be tested on the same MRS agar plate at substantially the same time, and then incubating the agar plate under anaerobic conditions at 37°C overnight. If the growth of the obligatory heterofermentative lactic acid bacterial species is inhibited by at least 5 mm, then the homofermentative strain is considered not suitable for the present invention. If the silage inoculant consists of more than one homofermentative bacterial species, all relevant combinations should be tested. By such test it has been found that *L. lactis* NCIMB 30117 inhibited *L. buchneri* DSM 22501.

An important feature of the homofermentative bacterial species is that it reduces pH fast without producing an excess amount of lactic acid.

In the present specification and claims "a strain which reduces pH fast without producing an excess amount of lactic acid" is defined as a strain which produces not more than 3 mg/ml lactic acid after 24 hours inoculation in a water bath at 30°C of a tube containing 150,000 CFU/ml of the strain in 10 ml of a sterile silage medium produced by mixing 5 g/L Yeast extract (Oxoid L21), 5 g/L Peptone soya neutralized (Oxoid LP0044C), 0.8 g/L soluble starch (Merck 1252), 0.08 g/L Manganese(II) sulfate dihydrate (Sigma M-1114), 0.037 g/L Succinic acid (assay lab), 0.069 g/L Citric acid monohydrate and 0.14 L-Malic acid (Merck 244) in 900 mL Milli Q water until dissolved, adjusting the pH to 6.3, distributing to baby bottles and autoclaving at 121°C for 15 minutes, and then adding 100 ml of sterile filtered sugar solution containing 56 g/L D(-) fructose (Merck 4007), 32 g/L D(+) glucose monohydrate (Merck 8342), 20 g/L D(+) xylose (Merck 8689), 20 g/L L(+) arabinose (Aldrich A9, 190-6), and 32 g/L sucrose (Merck 7651).

According to the present invention the obligatory heterofermentative lactic acid bacterial species is a *Lactobacillus buchneri.* Examples of *Lactobacillus buchneri* which are contemplated to be useful in the present invention are *L. buchneri* KKP .907, *L. buchneri* DSM 22963, *L. buchneri* NCIMB 40788, *L. buchneri* NCIMB 30139, *L. buchneri* DSM 16774, *L. buchneri* DSM 22963, *L*. *buchneri* DSM 12856. Most preferably, the *Lactobacillus buchneri* is the strain *Lactobacillus buchneri* deposited as DSM 22501.

In one embodiment of the silage inoculant according to the invention, at least one of the homofermentative species is an *Enterococcus* such as an *Enterococcus faecium.* Examples of *Enterococci* which are contemplated to be useful in the present invention are *E. faecium* NCIMB 10415, *E. faecium* CNCM I-3236, *E. faecium* BIO 34 and *E. faecium* DSM 16573.

In another embodiment of the silage inoculant according to the invention at least one of the homofermentative species is a *Lactococcus* such as a *Lactococcus lactis.* Most preferably, the *Lactococcus lactis* is the strain deposited as DSM 11037.

In a presently preferred embodiment the silage inoculant as the active components only comprises a *Lactobacillus buchneri* and a *Lactococcus* which does not reduce growth of the obligatory heterofermentative lactic acid bacteria of the species *Lactobacillus buchneri.*

The present invention also provides a method for producing a fermented feed product, said method comprising inoculating a plant material with the silage inoculant according to the invention. It has surprisingly been found that the silage inoculants according to the present invention are able to provide a very fast effect. Thus, in a presently preferred method the plant material is inoculated with the silage inoculant for a period of up to 4 days only before the silage bunker is opened. However, the plant material may also be inoculated for a longer period such as up to 7 days, up to 14 days or up to 28 days or even longer such as a period of at least 60 days or at least 90 days the latter being the conventional period for testing effect of silage inoculants.

The use of the terms "a" and "an" and "the" and similar referents in the context of describing the invention (especially in the context of the following claims) are to be construed to cover both the singular and the plural, unless otherwise indicated herein or clearly contradicted by context. The terms "comprising", "having", "including" and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

### DEPOSITED STRAINS

The *Lactobacillus plantarum* strain CH6072 has been deposited at DSMZ (Deutsche Sammlung von Mikroorganismen und Zellkulturen GmbH, Inhoffenstrasse 7B, D-38124 Braunschweig) under the accession number DSM 16568 with a deposit date of June 20, 2008 by Chr. Hansen A/S, Denmark. The deposit has been made under the conditions of the Budapest Treaty on the International Recognition of the Deposit of Microorganisms for the Purposes of Patent Procedure.

The *Lactobacillus buchneri Lb1819* has been deposited at DSMZ (Deutsche Sammlung von Mikroorganismen und Zellkulturen GmbH, Inhoffenstrasse 7B, D-38124 Braunschweig) under the accession number DSM 22501 with a deposit date of April 22, 2009 by Chr. Hansen A/S, Denmark. The deposit has been made under the conditions of the Budapest Treaty on the International Recognition of the Deposit of Microorganisms for the Purposes of Patent Procedure.

The *Enterococcus faecium* strain M74 has been deposited at DSMZ (Deutsche Sammlung von Mikroorganismen und Zellkulturen GmbH, Inhoffenstrasse 7B, D-38124 Braunschweig) under the accession number DSM 22502 with a deposit date of May 7, 2009 by Chr. Hansen A/S, Denmark. The deposit has been made under the conditions of the Budapest Treaty on the International Recognition of the Deposit of Microorganisms for the Purposes of Patent Procedure.

For the above-identified deposited microorganisms, the following additional indications apply: As regards the respective Patent Offices of the respective designated states, the applicants request that a sample of the deposited microorganisms stated above only be made available to an expert nominated by the requester until the date on which the patent is granted or the date on which the application has been refused or withdrawn or is deemed to be withdrawn.

DSM 11037 has been deposited with DSMZ (Deutsche Sammlung von Mikroorganismen und Zellkulturen GmbH, Inhoffenstrasse 7B, D-38124 Braunschweig) on June 26, 1996 by Chr. Hansen A/S, Denmark and is referred to in granted patent EP 928333.

Embodiments of the present invention are described below, by way of non-limiting examples.

### LEGEND TO FIGURES

Figure 1a pH reduction over 48 h of sterile silage medium inoculated with Composition 1 (Δ), Composition 2 (□), Composition 3 (○), Composition 4 (◇) and Composition 5 (X). Start inoculation was 150,000 CFU/ml and the temperature was kept at 30°C, n=1.
Figure 1b Lactic acid concentration over 48 h of sterile silage medium inoculated with Composition 1 (Δ), Composition 2 (□), Composition 3 (○), Composition 4 (◇) and Composition 5 (X). Start inoculation was 150,000 CFU/ml and the temperature was kept at 30°C, n=1.
Figure 1c Acetic acid concentration over 48 h of sterile silage medium inoculated with Composition 1 (Δ), Composition 2 (□), Composition 3 (○), Composition 4 (◇) and Composition 5 (X). Start inoculation was 150,000 CFU/ml and the temperature was kept at 30°C.
Figure 2 pH reduction over 72 h of sterile ensilage medium inoculated with Composition 2 (□), Composition 4 (◇) and Composition 6 (▭). Start inoculation was 150,000 CFU/ml and the temperature was kept at 30°C.
Figure 3 Acetic acid/lactic acid proportion of maize harvested 2011 in Denmark (mini-silo 1) and either not inoculated (white bars), inoculated with Composition 4 (grey bars) or Composition 7 (black bars). The mini silo vacuum bags were stored at 25 °C until opening after 7, 28, 61 and 88 days.
Figure 4 Aerobic stability of maize harvested 2012 in Denmark (mini-silo 2) and either not inoculated ( 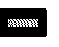 ), inoculated with Composition 4 (◇) or Composition 5 (X). Dashed black line shows ambient temperature, while the dashed grey line is the ambient temperature + 3°C.
Figure 5 pH of mini silo with maize silage harvested 2012 (mini-silo2) after seven days of aerobic challenge incl. SEM of four observations. Either not inoculated (white bar), inoculated with Composition 4 (grey bar) or Composition 5 (dotted bar).
Figure 6 Aerobic stability of maize harvested 2013 in Denmark (mini-silo 3) and either not inoculated ( 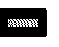 ), inoculated with Composition 2 (□) or Composition 4 (◇). Dashed black line shows ambient temperature, while the dashed grey line is the ambient temperature + 3°C.
Figure 7 Aerobic stability of red maize forage harvested 2013 (mini-silo 4) and either not inoculated ( 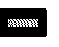 ), inoculated with Composition 2 (□), Composition 4 (◇) and Composition 7 ( 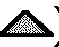 ). Dashed black line shows ambient temperature, while the dashed grey line is the ambient temperature + 3°C.
Figure 8 Aerobic stability of red clover:timothy:fescue forage harvested 2013 (mini-silo 5) and either not inoculated ( 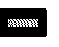 ), inoculated with Composition 2 (□), Composition 4 (◇), Composition 7 ( 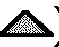 ). Dashed black line shows ambient temperature, while the dashed grey line is the ambient temperature + 3°C.

### EXAMPLES

### Example 1 - Sterile in vitro batch cultures

Single strains of homofermentative and heterofermentative lactic acid bacteria and combination products were tested in two independent experimental setups. The pH and organic acid were measured over time in a sterile medium containing various different carbohydrate sources in order to simulate carbohydrate composition of grass. The medium contained 5 g/L Yeast extract (Oxoid L21), 5 g/L Peptone soya neutralized (Oxoid LP0044C), 0.8 g /L soluble starch (Merck 1252), 0.08 g/L Manganese(II) sulfate dihydrate (Sigma M-1114), 0.037 g/L Succinic acid (assay lab), 0.069 g/L Citric acid monohydrate and 0.14 L-Malic acid (Merck 244) which was mixed in 900 mL Milli Q water until dissolved. The pH was adjusted to 6.3 and distributed to baby bottles and autoclaved at 121°C for 15 minutes. After autoclaving 100 ml of sterile filtered sugar solution containing 56 g/L D(-) fructose (Merck 4007), 32 g/L D(+) glucose monohydrate (Merck 8342), 20 g/L D(+) xylose (Merck 8689), 20 g/L L(+) arabinose (Aldrich A9, 190-6) and 32 g/L Sucrose (Merck 7651) was added. This medium is referred to as silage medium. In both experiments 1 and 2 the sterile silage medium was used and inoculated with the various different compositions outlined in Table 1.

**Table 1**

| Strain compositions used in the two *in vitro* batch culture studies | | | | |
|---|---|---|---|---|
| Composition no. | Experiment | Bacterial strains | Percentage | CFU/ml |
| 1 | 1 | *L. plantarum* DSM 16568 | 100 | 150,000 |
| 2 | 1, 2 | *L. buchneri* DSM 22501 | 100 | 150,000 |
| 3 | 1 | *L. lactis* DSM 11037 | 100 | 150,000 |
| 4 | | *L. buchneri* DSM 22501 | 50 | 150,000 |
| | 1, 2 | *L. lactis* DSM 11037 | 50 | |
| | | *L. buchneri* DSM 22501 | 70 | |
| 5 | 1 | *L. lactis* DSM 11037 | 20 | 150,000 |
| | | *L. plantarum* DSM 16568 | 10 | |
| 6 | | *L. buchneri* DSM 22501 | 50 | 150,000 |
| | 2 | *L. plantarum* DSM 16568 | 50 | |

### Experiment 1

10 ml of the silage medium inoculated with the various compositions in Table 1 was distributed into eleven sterile tubes for each composition and kept in a water bath at 30°C. After 0, 2, 4, 6, 7, 8, 9, 11, 14, 24 and 48 hours samples were taken for volatile organic acid (VFA) and lactic acid analysis and pH. The pH was monitored using a handheld pH-meter, while volatile organic acids were analyzed on HPLC (Dionex).

### Experiment 2

In the experimental setup 2 the same sterile silage medium, inoculation level and temperature was used. This time compositions 2, 4 and 6 were inoculated and an automatic pH-meter were used. Acetic acid, lactic acid and formic acid were measured on a HPLC (Dionex) after 72 h.

### Results

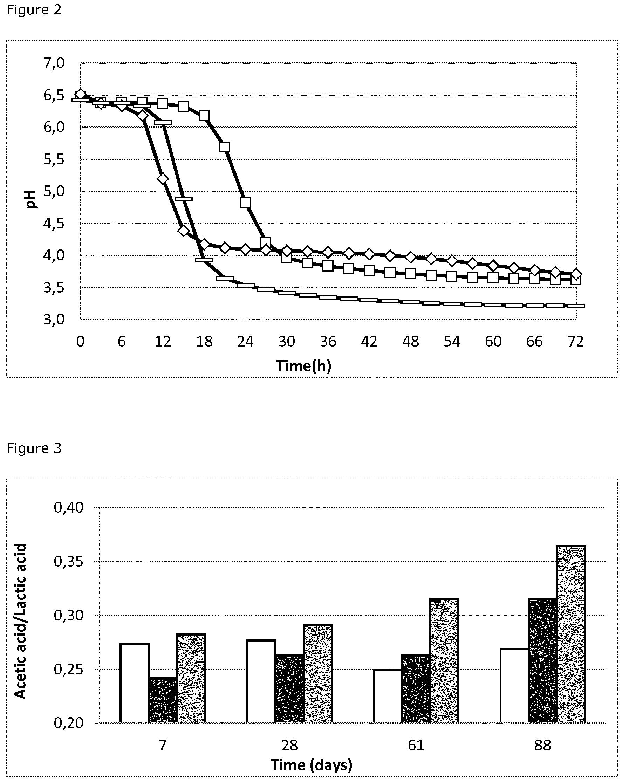

The results of the various compositions on pH and organic acid are provided in Figures 1a, b, c and Figure 2 as well as in Table 2.

Figure 1a shows that Composition 2 reduced pH very slowly. Composition 1 and Composition 3 reduce the pH much faster and after 14 hours the pH was below 5.0 while Composition 2 still had a pH above 6.0. Composition 4 reduced the pH as quickly as Composition 3. Composition 5 resulted in a pH curve very similar to Composition 1.

Figure 1b shows the lactic acid concentration over time. After 24 hours Composition 1 produced much more lactic acid compared to Composition 2, Composition 3 or Composition 4. After 48 hours the lactic acid concentration of Composition 1 was more than 8 mg/ml as opposed to 4 mg/ml or lower with Composition 2, Composition 3 or Composition 4. Composition 5 resulted in a lactic acid concentration very similar to Composition 1.

Figure 1c shows the acetic acid concentration over time. After 48 hours Composition 2 has a concentration over 2 mg/ml of acetic acid, while Composition 1 and Composition 3 produced less than 0.5 mg/ml. Composition 4 produced 1 mg/ml of acetic acid after 48 h, while Composition 5 resulted in a concentration less than 0.5 mg/ml.

Figure 2 shows again how Composition 2 reduced pH very slowly. Composition 4 reduced the pH much faster and after 15 hours the pH was below 4.5, while Composition 6 still had a pH of above 6.0. Composition 6 resulted a in slightly slower pH drop compared to Composition 4. However, the pH reduction continued rapidly and the pH was below 4.0 already after 18 hours. After 72 hours the pH of Composition 2 and Composition 4 reached 3.6 and 3.7, respectively, while Composition 6 went as low as 3.2.

**Table 2**

| Organic acid production of inoculated sterile silage medium after 72 hours | | | | | |
|---|---|---|---|---|---|
| Composition no. | Bacterial strains | % | Formic acid (mg/ml) | Acetic acid (mg/ml) | Lactic acid (mg/ml) |
| 2 | *L. buchneri* DSM 22501 | 100 | 0.012 | 2.895 | 4.077 |
| 4 | *L. buchneri* DSM 22501 | 50 | 0.447 | 1.760 | 3.488 |
| | *L. lactis* DSM 11037 | 50 | | | |
| 6 | *L. buchneri* DSM 22501 | 50 | 0.014 | 0.554 | 10.777 |
| | *L. plantarum* DSM 16568 | 50 | | | |

Table 2 shows how the acetic acid production is strongly reduced in Composition 6, which combines L. *buchneri* DSM 22501 with L. *plantarum* DSM 16568 in contrast to Composition 4, which combines L. *buchneri* DSM 22501 with L. *lactis* DSM 11037. Composition 6 also showed a high lactic acid concentration after 72 hours. Composition 4 not only had a much higher acetic acid concentration compared to Composition 6, but it also had a high concentration of formic acid.

### Example 2 - Aerobic stability in mini-silos

Five different mini-silo experiments were set up to test various different silage inoculant compositions. Three experiments were set up in Denmark with maize harvested from three different farms in 2011 (Mini-silo 1), 2012 (Mini-silo 2) and 2013 (Mini-silo 3) and two experiments were conducted in Lithuania in 2013 using maize and red clover:timothy:fescue sward (60:30:10) (Mini-silos 4 and 5). An overview on the inoculants which were applied and the application rate are listed in Table 3.

**Table 3**

| Strain compositions used in the five mini-silo studies | | | | | |
|---|---|---|---|---|---|
| Composition no. | Mini silo no. | Forage | Bacterial strains | Percentage | CFU/g forage |
| No additive | 1,2,3,4, 5 | Maize | | 0 | |
| | | Grass/Clover | | | |
| 2 | 3, 4 | Maize | *L. buchneri* DSM 22501 | 100 | 150,000 |
| | 5 | Grass/Clover | | | |
| 4 | 1, 2, 3, 4, 5 | Maize | *L. buchneri* DSM 22501 | 50 | 150,000 |
| | | Grass/Clover | *L. lactis* DSM 11037 | 50 | |
| | 2 | Maize | *L. buchneri* DSM 22501 | 70 | |
| 5 | | | *L. lactis* DSM 11037 | 20 | 150,000 |
| | | | *L. plantarum* DSM 16568 | 10 | |
| | 1, 4 | Maize | *L. buchneri* DSM 22501 | 50 | |
| 7 | 5 | Grass/Clover | *E. faecium* DSM 22502 | 30 | 150,000 |
| | | | *L. plantarum* DSM 16568 | 20 | |

For mini-silo 1 the maize was harvested in South-West Jutland. The transport until the laboratory was 4 hours. Afterwards the maize was stored overnight outside before being frozen at -20°C. At the time of inoculation the maize was thawn for 1-2 hours and then kept in the fridge at 4-5°C. Inoculants were suspended in tap water and filled into spray flasks. The targeted dosage for each treatment was 150,000 CFU/g maize and the amount needed to reach the targeted inoculum was calculated based on the actual potency of the compositions. 1000g were weighed into a plastic bag a little at a time so that the inoculant could be sprayed homogeneously onto the maize. The bag was then shaken to ensure equal distribution of the inoculum the bag. The 1000g inoculated maize was then distributed to five alubags a 200g for each time point (7, 28, 61 and 88 days). The vacuum packed alubags were stored at 25°C.

Five alubags per treatment were opened at the different time points. The samples were then measured for small organic acids.

For mini-silo 2 freshly harvested maize was collected from a farm in central Zealand, Denmark, and transported to the lab straightaway. The five different treatments listed in Table 3 as well as a control group were tested in a mini-silo set up.

Inoculants were suspended in tap water and filled into spray flasks. The targeted dosage for each treatment was 150,000 CFU/g maize and the amount needed to reach the targeted inoculum was calculated based on the actual potency of the products. 1000 grams of maize were weighed into a bag a little at a time so that the inoculant could be sprayed homogeneously onto the maize. After shaking the bag to ensure further distribution of the inoculum the bag was vacuum packed. Four bags of each treatment were prepared and stored at 25°C for further analysis after three months.

After three months an aerobic stability study was set up with silage stored in vacuum bags. Silage was distributed into containers (plastic bottles open on top with a hole in the bottom) with a temperature sensor located in the middle, placed in a polystyrene hollow, covered with a large plastic plate, and stored at room temperature. The temperature of each individual sample after exposure to air was monitored over a period of 7 days.

For mini-silo 3 freshly harvested maize was collected from a farm in north-east Zealand. The procedure was the same as described in mini-silo 2, except that the aerobic stability study was conducted after only two weeks.

### Results of mini-silo 1, 2 and 3

The acetic acid to lactic acid proportion of mini-silo 1 at different time points are shown in figure 3. The proportion of acetic acid to lactic acid is higher in the not inoculated control compared to Composition 7 after seven days and after 28 days. However, after 88 days Composition 7 has a high acetic acid to lactic acid proportion compared to control. Composition 4 has a high acetic acid to lactic acid proportion from day seven which increases over time. The average pH of all samples is below 4.0 at all time points.

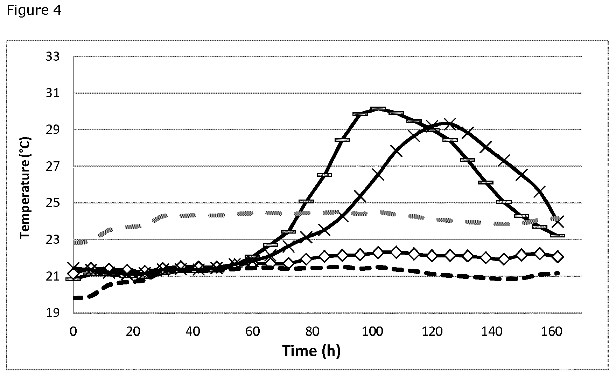

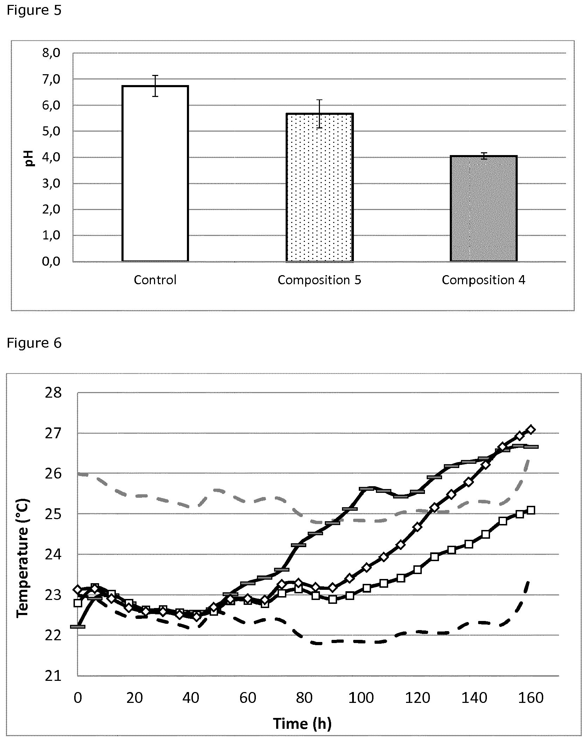

The results of mini-silo 2 are shown in Figure 4. It can be seen that the temperature of the non-inoculated control silage was above 3°C of the ambient temperature after 78 hours, while Composition 5 went above 3°C of the ambient temperature after 96 hours. Composition 4 kept the maize silage stable during all 162 hours of measurement. After 162 hours the pH of the control was on average at 6.74, while silage treated with Composition 5 had an average of pH 5.67 and Composition 4 a pH average of pH 4.05 (Figure 5).

When opening the vacuum-packed mini-silos in mini-silo 3 the silage which was not inoculated was unstable after 93 hours, while Composition 2 was stable for the whole period of 160 hours and Composition 4 was able to keep the silage stable for 129 hours (Figure 6).

### Mino-silos 4 and 5 - Maize and grass/clover harvest 2013, Lithuania

Maize (Zea mays L.) was harvested in the dough stage of the grain maturation. The dry matter (DM) concentration of the maize was 38.85% and the water soluble carbohydrate concentration was 2.54%. Maize was chopped by a forage harvester under farm conditions to pieces of about 2 cm in length (mini-silo 4).

The grass clover mixture contained 60% red clover, 30% timothy and 10% fescue sward and was harvested and dried to a dry matter of 32.8%. This forage mixture is referred to as grass/clover mixture, and the water soluble carbohydrate was 20.3 g/kg DM (2.03% fresh forage). The grass/clover was chopped by a forage harvester under farm conditions to pieces of 2-3 cm in length (mini-silo 5).

Both for mini-silo 4 and mini-silo 5, five representative samples (>500 g each) were taken for nutritional value analysis of both forages and treatment. The forages were transported in a polyethylene bag to the laboratory. Laboratory experiments started within 0.5 h from crop preparation. A 500 g representative sample of wilted and chopped herbage was taken for nutritional value, buffer capacity, nitrate and microbial composition analyses. The same silage inoculants and procedure were used in the maize and the grass/clover forage trials.

The silage inoculant was suspended in distilled water immediately prior to its application targeting a dose as described in Table 3. Five replicates were conducted for each treatment. The application rates of the products were calculated according to the stated dose in Table 3 and the actual bacterial concentration of the products. Chlorine-free water was used when diluting the products. The same volume of distilled water was used instead of the suspension in the control treatment (for spontaneous fermentation). After inoculation 3-L glass jars were filled with 1.80-1.84 kg of the fresh crop equally to 1 kg DM per 5 liter volume. The jars were closed with caps 15 min after being filled. Gas production during fermentation was released with a gas-vent during the experiment. After 90 days of storage of the glass jars, at a constant temperature of 20°C, chemical and microbial analyses were conducted.

In order to measure the aerobic stability of the silages the temperature was monitored inside the silage for 10 days. For this, thermocouple wires were inserted in the midpoint of the silage samples which were placed in open polystyrene boxes. The top and bottom of the boxes contained a 2-cm-diameter hole to allow air to enter and CO₂ to leave. A transducer was placed in the center of the silage mass through a hole in the cover of the box, which exposed the silage to air. These silages were not disturbed during the period of recording the temperatures. The boxes were kept in constant room temperature (≈20°C). Ambient temperature and the temperature of each silage was recorded every 6 h by a data logger. Ambient room temperature was measured by using an empty control box. Aerobic stability of silages was examined by calculating the differences between silage temperature and ambient room temperature. Aerobic deterioration was denoted by days (or hours) until the start of a sustained increase in temperature of more than 3°C above the ambient temperature.

**Table 4**

| Analytical methods | | |
|---|---|---|
| Quality parameters | Object | Short description or essence of method, reference |
| Dry matter (DM) | Herbage* | Oven drying at 67°C for 24 h, equilibrated to room humidity overnight, milled through a 1 mm sieve and further dried at 105°C to constant weight |
| | Silage** | |
| Crude protein | * | Kjeldahl-AOAC 984.13. 10.5 g of catalyst is used. With Block Digestion and Tecator Kjeltec system 1002 Distiling Unit |
| | ** | |
| Crude fat | * | Extraction by Soxtec System using petrol ether 40-600C. Crude fat residue determined gravimetrically after drying |
| | ** | |
| Crude fibre | * | With Fibercap (Foss Tecator) using sulphuric acid and Na hydroxide treatment |
| | ** | |
| Acid detergent fibre (ADF) | * | ANKOM A200 Filter Bag Technique (FBT) |
| | ** | |
| Neutral detergent fibre (NDF) | * | A200 Filter Bag Technique (FBT) |
| | ** | |
| Water soluble carbohydrates (WSC) | * | Using the anthrone reaction assay (MAFF, 1986), from the herbage or silage extracts obtaining from steeping fresh herbage or silage in water |
| | ** | |
| Crude ash | * | AOAC Method 942.05. Ca - AOAC 968.08 dry ashing, atomic Absorption Spectrophotometric Method, P - spectrophotometric Molybdovanadophosphate Method |
| | ** | |
| Buffering capacity | * | According to Playne and McDonald (1966), expressed as mequiv of alkali required to change the pH from 4 to 6 per 100 g of dry matter |
| Nitrate | * | Herbage extracts obtaining from steeping fresh herbage in water analyzed using the nitrate ion selective electrode |
| Lactic acid | ** | On an aqueous extract from fresh silage according to the standard methods (Naumann and Bassler, 1997) |
| Acetic acid | ** | |
| Butyric acid | ** | |
| Ammonia N | ** | Distillation - AOAC 941.04 |
| pH after 3, 90 and 97 days | ** | Silage extracts obtained from steeping fresh herbage in water analyzed using ThermoOrion Posi-pHIo SympHony Electrode and Thermo Orion 410 meter |
| pH before ensiling | * | |
| Weight loss (DM losses) | ** | Estimated by measuring differences in silo weights before and after ensiling |
| Yeast and Moulds | * | LST ISO 21527-2:2008 |
| | ** | |
| Lactic acid bacteria | * | ISO 15214:1998 |
| Clostridia*** | * | ISO 7937:2004 |

* Five herbage samples for analyses were collected immediately after spraying and at the time of filling the silos ** Silages from each silo in each variants (including control) were sampled after 90 days of storage *** If more than 1500 cfu/g clostridia in the fresh forage, analysis are made of the silage for clostridia VFA & Lactic acid and lower alcohol concentrations were determined by gas-liquid chromatography on aqueous silage extracts obtained from steeping 30 g of fresh silage in 150 ml of deionized water for 16 h at 40°C in a sealed container followed by a preliminary filtering through 3µm filter paper. Deionized water (3ml) of an internal standard solution (0.5 g 3-methyl-n-valeric acid in 1000 ml 0.15mol l-1 oxalic acid) was added to 1 ml of filtrate from the above, and the solution filtered through a 0.45 µm polyethersulphone membrane into a chromatographic sample vial for analysis. Gas - liquid chromatograph GC -2010 SHIMADZU used wide-bore capillary column (Stabilwax®-DA 30 m, 0.53 mm, ID, 0.5µm) according to Gas Chromatography and Biochemistry Analyzer official methods. Ammonia-Nitrogen (NH₃N) was determined by Distillation - AOAC 941.04.

### Results of mini-silo 4 and 5

The results from the maize mini-silo 4 are shown in table 5. All three inoculated maize silages had a significant (P>0.05) lower pH compared to control after 3 days of anaerobic fermentation. Composition 4 and Composition 7 had significant less DM loss (%/kg), significantly (P<0.05) less N-NH3fraction (%/kg of total N) and a significantly (P<0.05) higher lactic acid concentration (%/kg DM) compared to Composition 2 and control. Inoculating maize with Composition 2 and Composition 4 resulted in significantly (P<0.05) higher acetic acid (%/kg DM) and propionic acid (%/kg DM) concentrations compared to Composition 7 and control. All inoculated maize silages had a lower yeast and mold count (log CFU/g) compared to control.

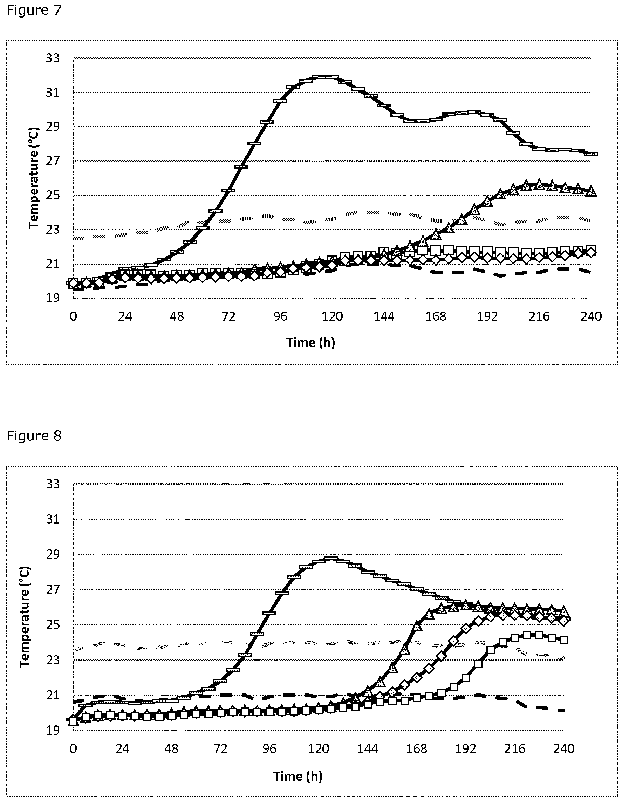

As can be seen in Figure 7 aerobic exposure of 10 days resulted in a temperature rise of above 3°C of the ambient temperature after 66 hours for not inoculated control silage, while Composition 7 went above 3°C of the ambient temperature after 178 hours, which was significantly (P<0.05) longer time compared to control and significantly (P<0.05) shorter time compared to Compositions 2 and 4. After 240 hours of aerobic exposure the pH of control was as high as 8.29, while Composition 7 had a pH of 5.66, which was significantly (P<0.05) lower compared to control.

**Table 5**

| Effect of various compositions on the fermentation variables and microbial composition of ensiled maize | | | | |
|---|---|---|---|---|
| | Control | Composition 2 (percentage) | Composition 4 (percentage) | Composition 7 (percentage) |
| *L. buchneri* DSM 22501 | | 100 | 50 | 50 |
| *L. lactis* DSM 11037 | | | 50 | |
| *E. faecium* DSM 22502 | | | | 30 |
| *L. plantarum* DSM 16568 | | | | 20 |

| Measurement after 3 days of anaerobic fermentation | | | | |
|---|---|---|---|---|
| pH after 3 days | 4.36^{a} | 4.18^{b} | 4.17^{b} | 4.14^{c} |

| Measurement after 90 days of anaerobic fermentation | | | | |
|---|---|---|---|---|
| pH after 90 days | 4.04^{a} | 3.91^{b} | 3.92^{b} | 3.90^{b} |
| DM, %/kg desiledt | 36.69 ^{a} | 37.52^{b} | 37.62^{b} | 37.77^{b} |
| DM loss, %/kg | 6.74^{a} | 4.42^{b} | 3.90^{c} | 3.43^{c} |
| N-NH3 fraction, %/kg total N | 5.18^{a} | 4.38^{b} | 3.92^{c} | 3.83 ^{c} |
| Lactic acid, %/kg DM | 2.78^{a} | 3.01^{a} | 3.47^{c} | 4.06^{b} |
| Acetic acid, %/kg DM | 1.11^{c} | 2.83^{a} | 2.68^{a} | 1.72^{b} |
| Butyric acid, %/kg DM | 0.034^{a} | 0.008^{b} | 0.006^{b} | 0.004^{b} |
| Propionic acid, %/kg DM | 0.012^{b} | 0.028^{a} | 0.026^{a} | 0.012^{b} |
| Alcohols, %/kg DM | 1.00^{a} | 0.62^{b} | 0.50^{c} | 0.49^{c} |
| Yeast (log CFU/g) | 3.93^{a} | 1.04^{b} | 1.26^{c} | 1.56^{c} |
| Moulds (log CFU/g) | 3.00^{a} | 1.0^{b} | 1.16^{b} | 1.25^{c} |

| Measurement after 10 days of aerobic exposure | | | | |
|---|---|---|---|---|
| pH after aerobic stability test | 8.29^{a} | 4.44^{b} | 4.39^{b} | 5.66^{c} |
| Aerobic stability, hours | 66.0^{b} | 240.0^{a} | 240.0^{a} | 177.6^{c} |

| | | | | |
|---|---|---|---|---|
| Different letters in a row with show statistically significant difference (P<0.05) There was no effluent in the silo's upon opening †Dry matter corrected for volatiles | | | | |

The results from mini-silo 5 using grass/clover are shown in table 6. All three inoculated grass/clover silages had a significant (P>0.05) lower pH compared to control after 3 days of anaerobic fermentation. Composition 4 and Composition 7 had significantly (P<0.05) less DM loss (%/kg). While all inoculated grass/clover silage had significantly (P<0.05) less N-NH3fraction (%/kg of total N) compared to control and significantly (P<0.05) higher lactic acid concentration (%/kg DM) than control, inoculating maize with Composition 4 resulted in a significantly (P<0.05) higher acetic acid (%/kg DM) concentration compared to Composition 7 and control. All inoculated grass/clover silages had a lower yeast and mold count (log CFU/g) compared to control.

As can be seen in Figure 8 aerobic exposure of 10 days resulted in a temperature rise of the not inoculated control silage above 3°C of the ambient temperature after 91 hours, while Composition 7 went above 3°C of the ambient temperature after 169 hours. Composition 4 went above 3°C after 191 hours and Composition 2 reached the same increase after 214 hours. After 240 hours of aerobic exposure pH of control was as high as 7.93, while pH of Composition 7 was 5.41, the pH of Composition 4 was 5.35, and the pH of Composition 2 was lowest with a pH value of 4.93.

**Table 6**

| Effect of various compositions on the fermentation variables and microbial composition of ensiled red clover: timothy: fescue | | | | |
|---|---|---|---|---|
| Treatment | Control | Composition 2 (percentage) | Composition 4 (percentage) | Composition 7 (percentage) |
| *L. buchneri* DSM 22501 | | 100 | 50 | 50 |
| *L. lactis* DSM 11037 | | | 50 | |
| *E. faecium* DSM 22502 | | | | 30 |
| *L. plantarum* DSM 16568 | | | | 20 |

| Measurement after 3 days of anaerobic fermentation | | | | |
|---|---|---|---|---|
| pH after 3 days | 4.75 ^{a} | 4.39 ^{b} | 4.40 ^{b} | 4.34 ^{c} |

| Measurement after 90 days of anaerobic fermentation | | | | |
|---|---|---|---|---|
| pH after 90 days | 4.38 ^{a} | 4.20 ^{b} | 4.17 ^{b} | 4.12 ^{c} |
| DM, %/kg desiledt | 30.49 ^{a} | 31.19 ^{b} | 31.45 ^{b} | 31.64 ^{c} |
| DM loss, %/kg | 7.90 ^{a} | 6.20 ^{b} | 4.94 ^{c} | 4.23 ^{c} |
| N-NH3 fraction, %/kg total N | 5.38 ^{a} | 4.05 ^{b} | 3.79 ^{b} | 3.57 ^{c} |
| Lactic acid, %/kg DM | 4.55 ^{a} | 6.28 ^{c} | 5.34 ^{b} | 5.89 ^{c} |
| Acetic acid, %/kg DM | 2.42 ^{a} | 2.38 ^{b} | 3.59 ^{b} | 2.01 ^{c} |
| Butyric acid, %/kg DM | 0.24 ^{a} | 0.01 ^{b} | 0.02 ^{b} | 0.01 ^{b} |
| Propionic acid, %/kg DM | 0.02 ^{a} | 0.02 ^{c} | 0.03 ^{a} | 0.02 ^{a} |
| Alcohols, %/kg DM | 0.94 ^{a} | 0.71 ^{c} | 0.82 ^{b} | 0.69 ^{c} |
| Yeast (log CFU/g) | 3.21 ^{a} | 1.00 ^{b} | 1.16 ^{b} | 1.65 ^{c} |
| Moulds (log CFU/g) | 3.03 ^{a} | 1.00 ^{b} | 1.32 ^{c} | 1.34 ^{c} |

| Measurement after 10 days of aerobic exposure | | | | |
|---|---|---|---|---|
| pH after aerobic stability test | 7.93 ^{a} | 4.93 ^{b} | 5.35 ^{c} | 5.41 ^{c} |
| Aerobic stability, hours | 91.20 ^{a} | 213.60 ^{b} | 190.8 ^{c} | 169.20 ^{c} |

| | | | | |
|---|---|---|---|---|
| Different letters in a row show statistically significant difference (P<0.05) There was no effluent in the silo's upon opening †Dry matter corrected for volatiles | | | | |

### Discussion

Acetic acid produced by *L. buchneri* is known to be an important acid to combat growth of aerobic spoilage strains at feed out, where the silage is exposed to oxygen. However, the growth of *L. buchneri* has a long lag time and the pH reduction using *L. buchneri* is very slow. This is well known and therefore inoculation *of L. buchneri* is often combined with a high lactic acid producing bacterial species (e.g. *L. plantarum*)*.* The combination of high lactic acid producing strains can, however, counteract the efficiency *of L. buchneri* on aerobic stability. This was shown Mini-silo 2 (Figure 4), where Composition 5, containing 70% *L. buchneri* DSM 22501 and 10% *L. plantarum* DSM 16568, 20% *L. lactis* DSM 11037, resulted in a much less stable silage compared to Composition 4, which contained only a low lactic acid producing strain (50% *L. lactis* DSM 11037) combined with *L. buchneri* DSM 22501 (50%).

The fast, but high end pH level of Composition 4 compared to other combinations with high lactic acid producing species, seemed to have the advantage that *L. buchneri* DSM 22501 was still able to continue growing or being metabolic active, which was indicated by a high acetic acid level (Figure 1c). The high acetic acid/lactic acid proportion of Composition 4 could also be shown in mini-silo 1 (Figure 3).

The high acetic acid/lactic acid proportion at an early stage of anaerobic fermentation apparently had a positive effect on the aerobic stability in mini-silo 3, which was opened after only a short period (2 weeks) of anaerobic fermentation.

It was shown that the DM loss, an important forage quality parameter, was as low for Composition 4 as for products containing high lactic acid producing strains (mini-silo 4 and mini-silo 5). Simultaneously a high acetic acid production is achieved. The high acetic acid level results in a very stable silage (Figures 4, 5, 6 and 7), which in all three cases with mini-silos (Example 2) was superior compared to other compositions with *L. buchneri* DSM 22501 (Compositions 5 and 7) where *L. plantarum* DSM 16568, a high lactic acid producing strain, was included.

The current experiments therefor show that by combining the facultative heterofermentative *L*. *buchneri* with only homofermentative strains a good forage quality can be achieved and an improved aerobic stability even for silages opened after only a short period of anaerobic fermentation.

### REFERENCES

Jatkauskas, J. and V. Vrotniakiene, "Evaluation of fermentation parameters, microbiological composition and aerobic stability of grass and whole crop maize silages treated with microbial inoculants." Zemdirbyste-Agriculture., 2013, Vol. 100, No. 2, pp. 143-150
Jatkauskas, J. et al. (2013), The effects of three silage inoculants on aerobic stability in grass, clover-grass, lucerne and maize silages, Agricultural and Food Science, 2013, 22, 137-144
Vandamme, B. et al, Polyphasic Taxonomy, a Consensus Approach to Bacterial Systematics, Microbiological Reviews, 1996, Vol. 60, No. 2, 407-438

## Claims

1. A silage inoculant which as the active components only comprises
a) obligatory heterofermentative lactic acid bacteria of the species *Lactobacillus buchneri* and
b) homofermentative bacteria of at least one of the species *Lactococcus* and *Enterococcus* which do not reduce growth of a).

2. The silage inoculant according to claim 1 which only comprises a *Lactobacillus buchneri* and a *Lactococcus.*

3. The silage inoculant according to claim 1 or 2 wherein the *Lactococcus* is a *Lactococcus lactis.*

4. The silage inoculant according to claim 3 wherein the *Lactococcus lactis* is the strain deposited as DSM 11037.

5. The silage inoculant according to any one of claims 1 to 4 wherein the *Lactobacillus buchneri* is the *Lactobacillus buchneri* deposited as DSM 22501.

6. The silage inoculant according to any one of claims 1 or 3 to 5 wherein the *Enterococcus* is an *Enterococcus faecium.*

7. A method for producing a fermented feed product, said method comprising inoculating a plant material with the silage inoculant according to any one of claims 1 to 6.

8. A method according to claim 7 wherein the plant material has been incubated with the silage inoculant for a period of up to 4 days.

9. A method according to claim 7 wherein the plant material has been incubated with the silage inoculant for a period of up to 7 days.

10. A method according to claim 7 wherein the plant material has been incubated with the silage inoculant for a period of up to 14 days.

11. A method according to claim 7 wherein the plant material has been incubated with the silage inoculant for a period of up to 28 days.

12. A method according to claim 7 wherein the plant material has been incubated with the silage inoculant for a period of at least 90 days.

## Patentansprüche

1. Silage-Impfmittel, das als aktive Bestandteile nur folgende umfasst:
a) obligatorische heterofermentative Milchsäurebakterien der Art *Lactobacillus buchneri* und
b) homofermentative Bakterien mindestens einer der Arten *Lactococcus* und *Enterococcus,* die nicht das Wachstum von a) reduzieren.

2. Silage-Impfmittel nach Anspruch 1, das nur einen *Lactobacillusbuchneriund* einen *Lactococcus* umfasst.

3. Silage-Impfmittel nach Anspruch 1 oder 2, wobei der *Lactococcus* ein *Lactococcus lactis* ist.

4. Silage-Impfmittel nach Anspruch 3, wobei der *Lactococcus lactis* der als DSM 11037 hinterlegte Stamm ist.

5. Silage-Impfmittel nach einem beliebigen der Ansprüche 1 bis 4, wobei der *Lactobacillus buchneri* der als DSM 22501 hinterlegte *Lactobacillus buchneri* ist.

6. Silage-Impfmittel nach einem beliebigen der Ansprüche 1 oder 3 bis 5, wobei der *Enterococcus* ein *Enterococcus faecium* ist.

7. Verfahren zur Herstellung eines vergorenen Futterprodukts, wobei das Verfahren die Inokulierung eines Pflanzenmaterials mit dem Silage-Impfmittel nach einem beliebigen der Ansprüche 1 bis 6 umfasst.

8. Verfahren nach Anspruch 7, wobei das Pflanzenmaterial mit dem Silage-Impfmittel bis zu 4 Tage lang inkubiert wurde.

9. Verfahren nach Anspruch 7, wobei das Pflanzenmaterial mit dem Silage-Impfmittel bis zu 7 Tage lang inkubiert wurde.

10. Verfahren nach Anspruch 7, wobei das Pflanzenmaterial mit dem Silage-Impfmittel bis zu 14 Tage lang inkubiert wurde.

11. Verfahren nach Anspruch 7, wobei das Pflanzenmaterial mit dem Silage-Impfmittel bis zu 28 Tage lang inkubiert wurde.

12. Verfahren nach Anspruch 7, wobei das Pflanzenmaterial mit dem Silage-Impfmittel mindestens 90 Tage lang inkubiert wurde.

## Revendications

1. Inoculant d'ensilage qui comme composants actifs ne comprend que
a) bactéries d'acide lactique hétérofermentaires obligatoires de l'espèce *Lactobacillus buchneri* et
b) bactéries homofermentaires d'au moins une des espèces *Lactococcus* et *Enterococcus* qui ne réduisent pas la croissance de a).

2. Inoculant d'ensilage selon la revendication 1 qui ne comprend qu'un *Lactobacillus buchneri* et un *Lactococcus.*

3. Inoculant d'ensilage selon la revendication 1 ou 2 où le *Lactococcus* est un *Lactococcus lactis.*

4. Inoculant d'ensilage selon la revendication 3 où le *Lactococcus lactis* est la souche déposée comme DSM 11037.

5. Inoculant d'ensilage selon l'une quelconque des revendications 1 à 4 où le *Lactobacillus buchneri* est le *Lactobacillus buchneri* déposé comme DSM 22501.

6. Inoculant d'ensilage selon l'une quelconque des revendications 1 ou 3 à 5 où *l'Enterococcus* est un *Enterococcus faecium.*

7. Méthode pour la production d'un produit alimentaire pour animaux fermenté, ladite méthode comprenant l'inoculation d'un matériel végétal avec l'inoculant d'ensilage selon l'une quelconque des revendications 1 à 6.

8. Méthode selon la revendication 7 où le matériel végétal a été incubé avec l'inoculant d'ensilage pour une période maximale de 4 jours.

9. Méthode selon la revendication 7 où le matériel végétal a été incubé avec l'inoculant d'ensilage pour une période maximale de 7 jours.

10. Méthode selon la revendication 7 où le matériel végétal a été incubé avec l'inoculant d'ensilage pour une période maximale de 14 jours.

11. Méthode selon la revendication 7 où le matériel végétal a été incubé avec l'inoculant d'ensilage pour une période maximale de 28 jours.

12. Méthode selon la revendication 7 où le matériel végétal a été incubé avec l'inoculant d'ensilage pour une période d'au moins 90 jours.
